Europäisches Patentamt

European Patent Office

Office européen des brevets

(11) Publication number: **0 287 185**
**A1**

## (12) EUROPEAN PATENT APPLICATION

(21) Application number: **88200726.3**

(22) Date of filing: **14.04.88**

(51) Int. Cl.⁴ **B66C 13/08**

(30) Priority: **15.04.87 NL 8700893**

(43) Date of publication of application:
**19.10.88 Bulletin 88/42**

(84) Designated Contracting States:
**BE DE ES FR GB IT NL**

(71) Applicant: **EUROPE CONTAINER TERMINUS B.V.**
**Seattleweg 7 P.O. Box 7400**
**NL-3000 HK Rotterdam(NL)**

(72) Inventor: **Wormmeester Gerhardus Johannes**
**Marsdiep 26**
**3332 TC Zwijndrecht(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Positioning appliance.**

㊲ A positioning appliance for accurately positioning a container suspended on crane cables with respect to a chassis on which the container is being placed comprises two slide chutes (30, 31) which are each pivotably suspended on a carriage (32 and 33 respectively). Said carriages can be moved along a rail (34). In order to make the appliance suitable for any type of chassis whatsoever, including a chassis suitable for the public highway, the slide chutes must not come into contact with the chassis. The appliance according to the invention makes this possible in that a spacer (37) which can be moved in the direction of movement of the carriages is disposed between the carriages. Each carriage is provided with a stopping device (38 and 39 respectively) which can be brought into engagement with said spacer by moving said carriages. The actuation means (35, 36) for moving both carriages are so coordinated in the event of contact between the two stopping devices and the spacer that the carriages, the stopping devices and the spacer are able to move as one unit.

## Positioning appliance.

The invention relates to a positioning appliance for positioning a container suspended on crane cables, comprising two slide chutes which are pivotably suspended at their top end on a carriage, actuating means for pivoting the slides and actuating means for moving the carriages.

Such an appliance is known from the published Dutch patent specification 72.09613 and is an aid in the centred placing of a container on a chassis. In the positioning state the slide chutes engage on said chassis and are able to move by moving the carriages in the longitudinal direction of the chassis, the contact devices of the slide chutes sliding along the chassis. The container can be positioned both in the longitudinal and transverse direction with respect to a chassis which is to be loaded. Because the slide chutes have to come into contact with the chassis during positioning, said chassis has to be of a specific design: the so-called terminal chassis type. The known appliance is unsuitable for positioning a container with respect to any construction whatsoever of a road chassis

The object of the invention is to eliminate this drawback and to provide the appliance mentioned in the introduction, the slide chutes of which do not have to engage on the chassis to be loaded during operation, a simple positioning of the container nevertheless being possible in the transverse and longitudinal direction

According to the invention, the positioning appliance is characterized for this purpose in that a spacer which can be moved in the direction of movement of the carriages is disposed between the carriages, in that each carriage is provided with a stopping device which can be brought into engagement with said spacer by moving said carriage and in that means are present to coordinate the actuating means for moving the carriages, when there is contact between the two stopping devices and the spacer, so that the carriages, the stopping devices and the spacer move as one unit.

In order to be able to adapt the positioning appliance readily to a number of container length dimensions, the spacer can be adjusted in a manner such that the distance between the slide chutes determined by the stopping of the stopping devices at the spacer can be adapted to the length of a container.

For example, the spacer is constructed in the form of a rotatable cylinder with a number of segments which have different lengths in the direction of movement of the spacer.

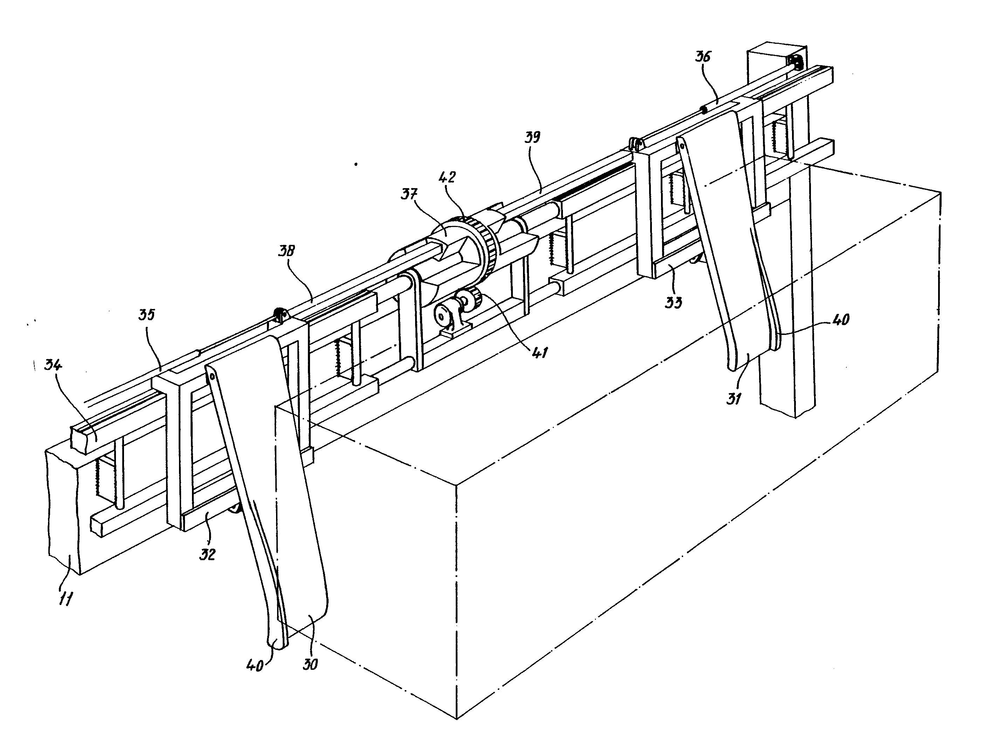

The invention will now be explained in more detail with reference to the figure which shows an exemplary embodiment.

The appliance is intended to position a container suspended by means of a spreader on cables of a container crane with respect to a loading chassis in a manner such that the container can be accurately placed on said chassis. At the same time, the loading chassis is of any type whatsoever. The positioning appliance is, for example, attached to the frame 11 of the container crane. The container is indicated with chain dot lines.

The appliance comprises two slide chutes 30, 31 which are pivotably suspended on a carriage 32 and 33 respectively. Said carriages are displaceable or drivable by means of hydraulic or pneumatic cylinder 35 and 36 respectively on a rail 34. Between the carriages there is a spacer 37 which is likewise movable on the rail 34 Each of the carriages 32, 33 has a stopping device in the form of a rod 38 and 39 respectively which can come up against the spacer 37. This latter is constructed in the form of a cylinder with a number of segments of different length.

The slide chutes 30, 31 are provided with an edge 40. The dimensions of the segments of the spacer 37 are so chosen that when the stopping rods 38, 39 engage thereon, the distance between the edges 40 of the slide chutes is only slightly greater than the length of a container. It will be clear that the various segments of the spacer cylinder 37 correspond to the various container lengths

This embodiment operates as follows. As soon as a container is brought by the crane between the slide chutes 30, 31, the cylinders 35, 36 are actuated. The stopping rods 38 and 39 respectively come into engagement with the spacer 37, the angular position of which is adjusted by means of a driven gear wheel 41 for the purpose of adapting to the length of the container concerned. The stopping position of the rods 38, 39, the container fits precisely between the edges 40. By now moving the carriages 32, 33 simultaneously by means of the cylinders 35, 36 (increasing the pressure to some extent in the case of one cylinder and lowering it somewhat in the case of the other) and by changing the pivoting position of the chutes 30, 31 by means of cylinders which are not shown, the container can readily be positioned so that, while moving with a certain spacing of the chutes, it will take up a desired position on any chassis whatsoever.

It is important that the chutes 30, 31 do not come into contact with the loading chassis on which the container is being placed. Other constructions are conceivable for the spacer 37. It may be constructed in the form of two concentric cylinders which are displaceable with respect to each other and which can be fixed in different positions.

## Claims

1. A positioning appliance for positioning a container suspended on crane cables, comprising two slide chutes (30, 31) which are pivotably suspended at their top ends on a carriage (32, 33), actuating means for pivoting the slide chutes and actuating means for moving the carriages, characterized in that a spacer (37) which can be moved in the direction of movement of the carriages is disposed between the carriages, in that each carriage is provided with a stopping device (38 and 39 respectively) which can be brought into engagement with said spacer by moving said carriage and in that means are present to coordinate the activating means (35, 36) for moving the carriages, when there is contact between the two stopping devices and the spacer, so that the carriages, the stopping device and the spacer move as one unit.

2. Positioning appliance according to claim 1, characterized in that the spacer (37) can be adjusted in a manner such that the distance between the slide chutes determined by the stopping of the stopping devices (38, 39) at the spacer (37) can be adapted to the length of a container.

3. The positioning appliance according to claim 2, characterized in that the spacer (37) is constructed in the form of a rotatable cylinder with a number of segments which have different lengths in the direction of movement of the spacer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A,D | NL-A-7 209 613 (WORMMEESTER)<br>* Page 4, lines 26-36; page 5, lines 1-28 *<br>--- | 1 | B 66 C 13/08 |
| A | NL-C- 165 991 (CONRAD-STORK)<br>--- | | |
| A | FR-A-2 323 607 (SALEN & WICANDER TERMINALSYSTEM AB)<br>--- | | |
| A | US-A-3 426 878 (CAMPBELL Jr.)<br>----- | | |

TECHNICAL FIELDS
SEARCHED (Int. Cl.4)

B 66 C
B 66 F

The present search report has been drawn up for all claims

| Place of search | Date of completion of the search | Examiner |
|---|---|---|
| THE HAGUE | 20-07-1988 | VAN DEN BERGHE E.J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                       

& : member of the same patent family, corresponding document

EPO FORM 1503 03.82 (P0401)